# EUROPEAN PATENT SPECIFICATION

(11) **EP 3 032 412 B1**
(45) Date of publication and mention of the grant of the patent: **26.06.2024**
(21) Application number: 15193088.0
(22) Date of filing: 05.11.2015
(51) Int. Cl.: G06F 8/65, G06F 9/445, G06F 11/14, G06F 9/50

(54) **METHOD AND DEVICE FOR UPGRADING FIRMWARE**
VERFAHREN UND VORRICHTUNG ZUR AKTUALISIERUNG EINER FIRMWARE
PROCÉDÉ ET DISPOSITIF DE MISE À NIVEAU DE MICROLOGICIEL

(30) Priority: 09.12.2014 CN 201410751727
(43) Date of publication of application: 15.06.2016
(73) Proprietor: Xiaomi Inc., Beijing 100085 (CN)
(72) Inventor: MENG, Deguo, 100085 BEIJING (CN); LIU, Xin, 100085 BEIJING (CN); HOU, Enxing, 100085 BEIJING (CN)
(74) Representative: Cabinet Beau de Loménie

(56) References cited:
- US-A1- 2005 055 595
- US-A1- 2014 007 071

## Description

### TECHNICAL FIELD

The present disclosure generally relates to the field of electronic devices and more particularly, to a method and a device for upgrading firmware.

### BACKGROUND

Upgrading firmware refers to refreshing the firmware embedded in an embedded Micro Control Unit (MCU), by which, the function and stability of an intelligent device may be improved and strengthened. Some sophisticated intelligent devices may need to upgrade firmware of a plurality of MCU chips, MCU-like chips, or non-MCU chips such as Wireless Fidelity (WIFI) chips, Bluetooth chips, etc.However, the logic required for upgrading the firmware of a plurality of chips in a device is sometimes complex.

US 2014/007071 is directed to a method for upgrading the firmware of a wireless microphone and a receiver by using the memory of the receiver.

US 2005/055595 directed to a method for upgrading the firmware of a plurality of mobile devices having two memory partitions that can be switched after the upgrade is performed.

### SUMMARY

The invention is defined by the independent claims.

The dependent claims define preferred embodiments.

In order to overcome the problems existing in the related art, embodiments of the present disclosure provide a method and a device for upgrading firmware, which are used to improve the security during upgrading firmware.

The invention relates to a method for upgrading firmware, for use in an intelligent device, comprising:
when it is determined that firmware of a first chip needs to be upgraded, identifying a first partition of a flash memory in a second chip, for downloading firmware of the second chip;
downloading new firmware of the first chip to the first partition; and
copying the new firmware of the first chip from the first partition to an effective position in the first chip.

In one embodiment, the method further comprises:
when it is determined that the firmware of the second chip needs to be upgraded, downloading new firmware of the second chip to the first partition;
activating the first partition to be a new second partition for storing proper firmware of the second chip; and
setting an original second partition to be a new first partition for downloading firmware of the second chip.

According to the invention, the identifying a first partition of a flash memory in a second chip, for downloading firmware of the second chip, comprises:
acquiring partition information of the second chip; and
identifying the first partition of the flash memory in the second chip, for downloading the firmware of the second chip, according to the partition information.

In one embodiment, the method further comprises:
after the new firmware of the first chip is downloaded to the first partition, verifying the new firmware of the first chip.

According to a second aspect, the invention relates to a device for upgrading firmware, for use in an intelligent device, comprising:
an identifying module, configured to, when it is determined that firmware of a first chip needs to be upgraded, identify a first partition of a flash memory in a second chip, for downloading firmware of the second chip;
a first downloading module, configured to download new firmware of the first chip to the first partition identified by the identifying module; and
a copying module, configured to copy the new firmware of the first chip downloaded by the first downloading module from the first partition to an effective position in the first chip.

In one embodiment, the device further comprises:
a second downloading module, configured to, when it is determined that the firmware of the second chip needs to be upgraded, download new firmware of the second chip to the first partition identified by the identifying module;
an activating module, configured to, after the new firmware of the second chip is downloaded to the first partition by the second downloading module, activate the first partition to be a new second partition for storing proper firmware of the second chip; and
a setting module, configured to, after the first partition is activated to be the second partition by the activating module, set an original second partition to be a new first partition for downloading firmware of the second chip.

According to the invention, the identifying module further comprises:
an acquiring submodule, configured to acquire partition information of the second chip; and
an identifying submodule, configured to identify the first partition of the flash memory in the second chip, for downloading firmware of the second chip, according to the partition information acquired by the acquiring submodule.

In one embodiment, the device further comprises:
a verifying module, configured to, after the new firmware of the first chip is downloaded to the first partition by the first downloading module, verify the new firmware of the first chip.

According to a third aspect, the invention relates to a device for upgrading firmware, for use in an intelligent device, comprising:
a processor; and
a memory for storing instructions executable by the processor,
wherein the processor is configured to:
   when it is determined that firmware of a first chip needs to be upgraded, identify a first partition of a flash memory in a second chip, for downloading firmware of the second chip;
   download new firmware of the first chip to the first partition; and
   copy the new firmware of the first chip from the first partition to an effective position in the first chip.

In one particular embodiment, the steps of the method for upgrading firmware are determined by computer program instructions.

Consequently, according to a fourth aspect, the invention is also directed to a computer program for executing the steps of a method for upgrading firmware as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may comprise the following advantageous effects: the firmware of the first chip is firstly determined to be upgraded, which may avoid conflict caused by upgrading firmware of a plurality of chips simultaneously, so as to improve the security of upgrading firmware. By downloading the new firmware of the first chip to the first partition of the flash memory in the second chip, and copying the new firmware of the first chip from the first partition to the effective position in the first chip, the first chip may be upgraded with the new firmware by virtue of the flash memory in the second chip, which avoids additional control logic during the upgrading and saves resources of the intelligent device.

It shall be understood that both the foregoing general description and the following details are exemplary and explanatory only and may not limit the present disclosure.

### BRIEF DESCRIPTION OF THE DRAWINGS

The accompanying drawings, which are hereby incorporated in and constitute a part of this specification, illustrate embodiments consistent with the invention and, together with the description, serve to explain the principles of the invention.
Fig. 1 is a flow chart showing a method for upgrading firmware according to an exemplary embodiment.
Fig. 2 is a flow chart showing a method for upgrading firmware according to a second exemplary embodiment.
Fig. 3 is a flow chart showing a method for upgrading firmware according to a third exemplary embodiment.
Fig. 4A is a diagram illustrating partitions of a MCU chip according to an exemplary embodiment.
Fig. 4B is the first diagram illustrating partitions for upgrading firmware of the MCU chip according to the exemplary embodiment.
Fig. 4C is the second diagram illustrating partitions for upgrading firmware of a WIFI chip according to the exemplary embodiment.
Fig. 4D is the third diagram illustrating partitions for upgrading the firmware of the WIFI chip according to the exemplary embodiment.
Fig. 4E is the fourth diagram illustrating partitions for upgrading the firmware of the WIFI chip according to the exemplary embodiment.
Fig. 5 is a block diagram illustrating a device for upgrading firmware according to an exemplary embodiment.
Fig. 6 is a block diagram illustrating another device for upgrading firmware according to an exemplary embodiment.
Fig. 7 is a block diagram illustrating a device applicable for upgrading firmware according to an exemplary embodiment.

### DETAILED DESCRIPTION

Exemplary embodiments will be described in detail herein, with examples thereof shown in drawings. In the following descriptions, when the drawings are referred to, unless expressed otherwise, the same number in different drawings refers to the same or similar elements. The implementary manners described in the exemplary embodiments below do not represent all implementary manners that are consistent with the invention. On the contrary, they are only examples of devices and methods that are consistent with some aspects of the invention as recited in the claims.

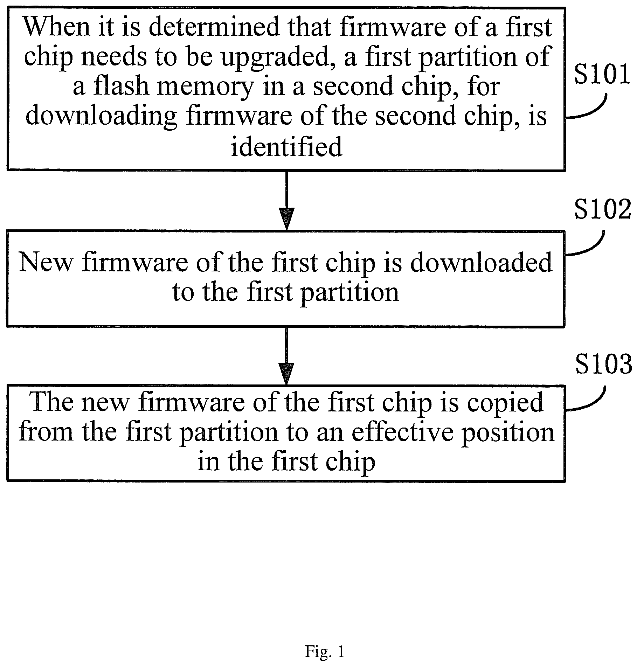

Fig. 1 is a flow chart showing a method for upgrading firmware according to an exemplary embodiment. The method for upgrading firmware may be applied in intelligent devices (such as intelligent plugs, intelligent televisions, intelligent air conditioners, etc). As shown in Fig. 1, the method for upgrading firmware comprises the following steps from S101 to S103:
In step S101, when it is determined that firmware of a first chip needs to be upgraded, a first partition of a flash memory in a second chip, for downloading firmware of the second chip, is identified.

In an embodiment, it may be, by remote control or by triggering a press key on an intelligent device, determined that the firmware of the first chip needs to be According to the invention, the first chip is a non-MCU chip such as a Bluetooth chip, a WIFI chip, etc, the second chip is a MCU chip or a MCU-like chip, and the first partition is a backup partition of a flash memory in a MCU chip. Alternatively, the first chip may be a MCU chip, and the second chip may be a non-MCU chip such as a Bluetooth chip, a WIFI chip, etc. Embodiments according to the present disclosure do not limit the names of the first chip and the second chip, so far as one of the first chip and the second chip has a flash memory.

In step S102, new firmware of the first chip is downloaded to the first partition.

In an embodiment, the new firmware of the first chip may be downloaded by Internet to the first partition.

In step S103, the new firmware of the first chip is copied from the first partition to an effective position in the first chip.

In an embodiment, the effective position in the first chip may be determined according to the type of the firmware.

In the present embodiment, the firmware of the first chip is firstly determined to be upgraded, which may avoid conflict caused by upgrading firmware of a plurality of chips simultaneously, so as to improve the security of upgrading firmware. By downloading the new firmware of the first chip to the first partition of the flash memory in the second chip, and copying the new firmware of the first chip from the first partition to the effective position in the first chip, the first chip may be upgraded with the new firmware by virtue of the flash memory in the second chip, which avoids additional control logic during the upgrading and saves resources of the intelligent device.

In an embodiment, the method for upgrading firmware may further comprises:
When it is determined that the firmware of the second chip needs to be upgraded, new firmware of the second chip is downloaded to the first partition.

Then the first partition is activated to be a new second partition for storing proper firmware of the second chip.

An original second partition is set to be a new first partition for downloading firmware of the second chip.

In an embodiment, the step S101 further comprises:
Partition information of the second chip is acquired.

The first partition of the flash memory in the second chip, for downloading the firmware of the second chip, is identified according to the partition information.

In an embodiment, the method for upgrading firmware may further comprise:
The new firmware of the first chip is verified after it is downloaded to the first partition.

The details of upgrading firmware in an intelligent device may further refer to the embodiments described hereinafter.

Thus, the above method provided by the embodiments according to the present disclosure may avoid conflict caused by upgrading firmware of a plurality of chips simultaneously so as to improve the security of upgrading firmware, avoid additional control logic during the upgrading, and save resources of the intelligent device.

The technical solutions provided by the embodiments according to the present disclosure will be illustrated in details hereinafter.

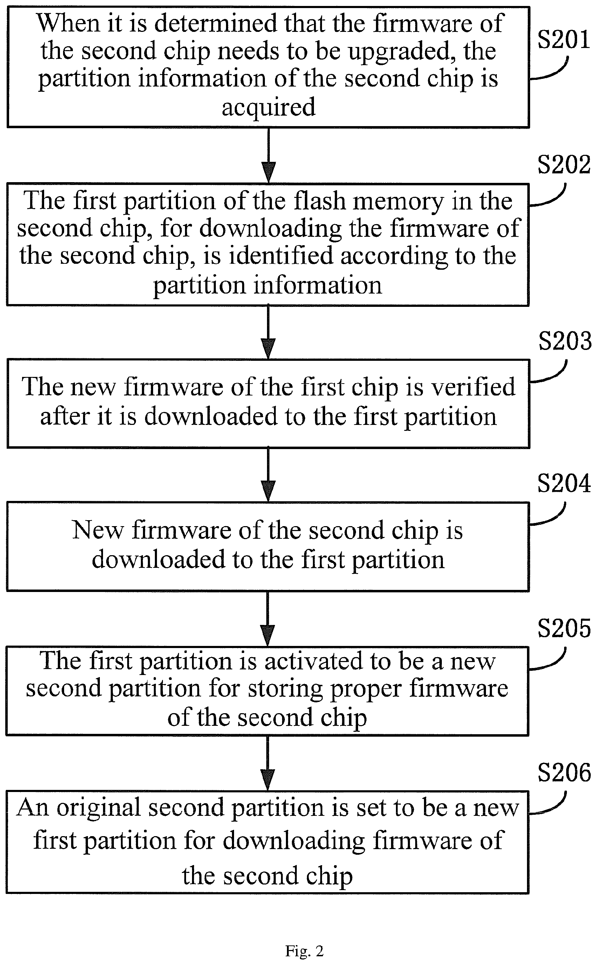

Fig. 2 is a flow chart showing a method for upgrading firmware according to the second exemplary embodiment. The embodiment uses the above methods provided by the above embodiments according to the present disclosure, in which, the second chip is a MCU chip, and the embodiment is illustrated by taking an example of upgrading the firmware of the MCU chip. As shown in Fig. 2, the method comprises:
In step S201, when it is determined that the firmware of the second chip needs to be upgraded, the partition information of the second chip is acquired.

In an embodiment, similar to the describing of the above-described step S101, it may be, by remote control or by triggering a press key on an intelligent device, determined that the firmware of the MCU chip needs to be upgraded. The partition information of the second chip indicates positions that the first partition and the second partition of the flash memory locate at.

In step S202, the first partition of the flash memory in the second chip, for downloading the firmware of the second chip, is identified according to the partition information.

In an embodiment, for example, the first partition is a backup partition of the flash memory.

In step S203, the new firmware of the first chip is verified after it is downloaded to the first partition.

In an embodiment, the new firmware of the first chip may be verified through Cyclic Redundancy Check (CRC), or through format information of the new firmware. By verifying the new firmware of the first chip, it may be ensured that the new firmware is correct, so as to ensure the upgrading firmware is reliable.

In step S204, new firmware of the second chip is downloaded to the first partition.

In step S205, the first partition is activated to be a new second partition for storing proper firmware of the second chip.

In an embodiment, for example, the second partition is an active partition of the flash memory, for storing the proper firmware of the MCU chip.

In step S206, the original second partition is set to be a new first partition for downloading firmware of the second chip.

The present embodiment is exemplarily illustrated by taking an example that the second chip is the MCU chip, in which, by downloading the firmware that the MCU chip needs to be upgraded to the backup partition, setting the backup partition to be the active partition, and setting the original second partition that the original proper firmware locates at to be the new backup partition, it may be realized that the firmware of the MCU chip is upgraded without occupying other resources of the intelligent device, which avoids additional control logic and saves resources of the intelligent device.

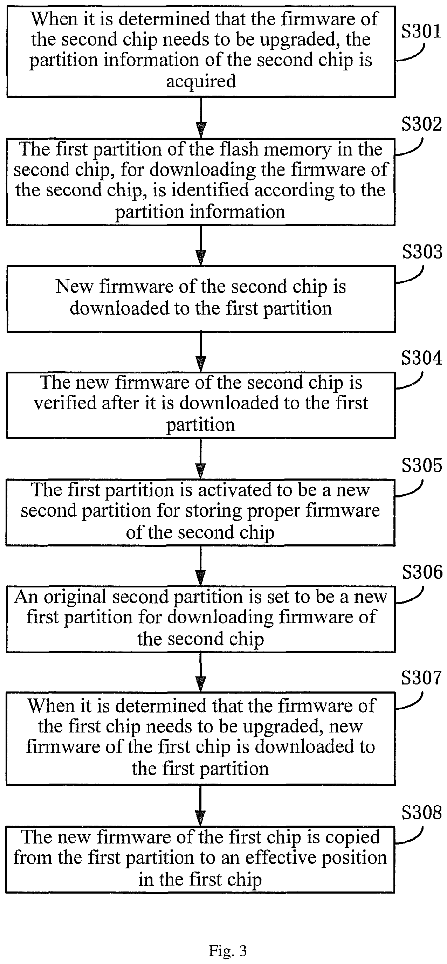

Fig. 3 is a flow chart showing a method for upgrading firmware according to a third exemplary embodiment. The embodiment uses the above methods provided by the above embodiments according to the present disclosure, which is exemplarily illustrated by taking an example that the firmware of the MCU chip of the intelligent device is upgraded firstly, then the firmware of a non-MCU chip (such as a WIFI chip, a Bluetooth chip, etc) is upgraded. As shown in Fig. 3, the method comprises:
In step S301, when it is determined that the firmware of the second chip needs to be upgraded, the partition information of the second chip is acquired.

In an embodiment, similar to the describing of the above-described step S101, it may be, by remote control or by triggering a press key on an intelligent device, determined that the firmware of the MCU chip needs to be upgraded. The partition information of the second chip indicates positions that the first partition and the second partition of the flash memory locate at.

In step S302, the first partition of the flash memory in the second chip, for downloading the firmware of the second chip, is identified according to the partition information.

In step S303, new firmware of the second chip is downloaded to the first partition.

In step S304, the new firmware of the second chip is verified after it is downloaded to the first partition.

In step S305, the first partition is activated to be a new second partition for storing proper firmware of the second chip.

In step S306, the original second partition is set to be a new first partition for downloading firmware of the second chip.

The describing of the steps S301 to S306 may respectively refer to the describing of the steps S201 to S206, details will be omitted herein.

In step S307, when it is determined that the firmware of the first chip needs to be upgraded, new firmware of the first chip is downloaded to the first partition.

In an embodiment, for example, the first chip is a WIFI chip, the first partition of the flash memory in the MCU chip is the original second partition of the flash memory, which is set to be a backup partition after the step S305.

In step S308, the new firmware of the first chip is copied from the first partition to an effective position in the first chip.

The present embodiment is exemplarily illustrated by taking an example that the firmware of the first chip and the firmware of the second chip are upgraded, in which, by downloading the firmware that the MCU chip needs to be upgraded to the backup partition, setting the backup partition to be the active partition, setting the original second partition that the original proper firmware locates at to be the new backup partition, downloading the firmware that the WIFI chip needs to be upgraded to the backup partition, and copying the firmware that the WIFI chip needs to be upgraded to the effective position in the WIFI chip, conflict caused by simultaneously upgrading the firmware of the MCU chip and the WIFI chip may be avoided, so as to improve the security of upgrading the firmware of the MCU chip and the WIFI chip. Further, by downloading the new firmware of the WIFI chip to the first partition of the flash memory in the MCU chip, and copying the new firmware of the WIFI chip from the backup partition to the effective position in the WIFI chip, the WIFI chip may be upgraded with the new firmware by virtue of the flash memory in the MCU chip, which avoids additional control logic during the upgrading and saves resources of the intelligent device. Alternatively, the WIFI chip may be a Bluetooth chip. The process for upgrading firmware of the Bluetooth chip may refer to the above-described, and details will be omitted herein.

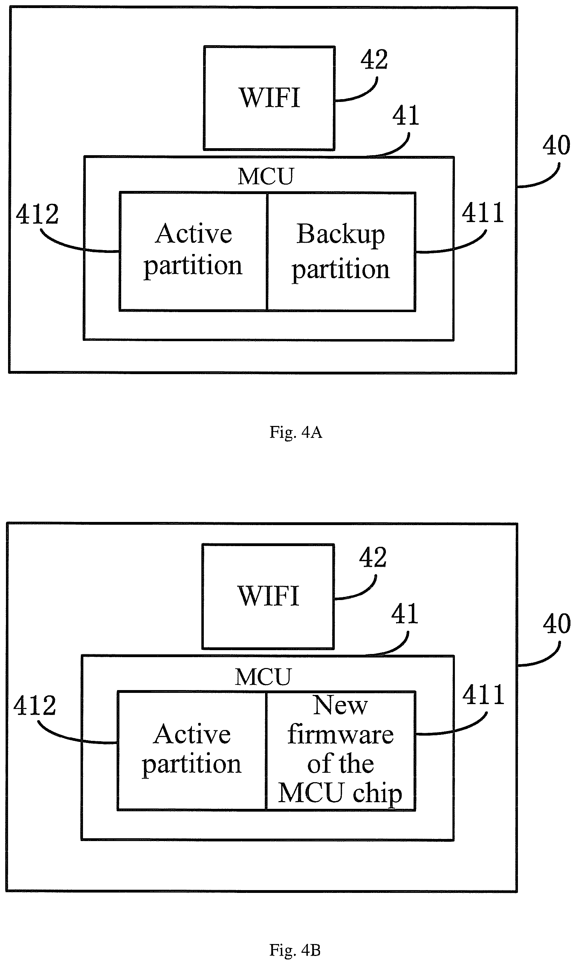

Referring to Fig. 4A to Fig. 4E, the process of upgrading firmware according to the present disclosure is exemplarily illustrated. The present embodiment is exemplarily illustrated by taking an example that the first chip is a WIFI chip, and the second chip is a MCU chip. It may be understood for the skilled in the art that, for a chip having a flash memory in an intelligent device, any technical solution for upgrading other firmware that needs to be upgraded by virtue of different partitions of the flash memory, may be understood as a technical solution according to the present disclosure.

When firmware of two or more chips needs to be upgraded, firmware of the chips in the intelligent device may be upgraded according to the above-mentioned method for upgrading firmware, according to a sequence of instructions received by the intelligent device, for example as follows:
As shown in Fig. 4A, an intelligent device 40 comprises a MCU chip 41 and a WIFI chip 42. A flash memory in the MCU chip 41 comprises a first partition 411 and a second partition 412, wherein the first partition 411 is configured to download new firmware of the MCU chip 41, and the second partition 412 is configured to store proper firmware of the MCU chip 41. In visually words, the first partition 411 may be referred to as a backup partition of the flash memory in the MCU chip, and the second partition 412 may be referred to as an active partition of the flash memory in the MCU chip.

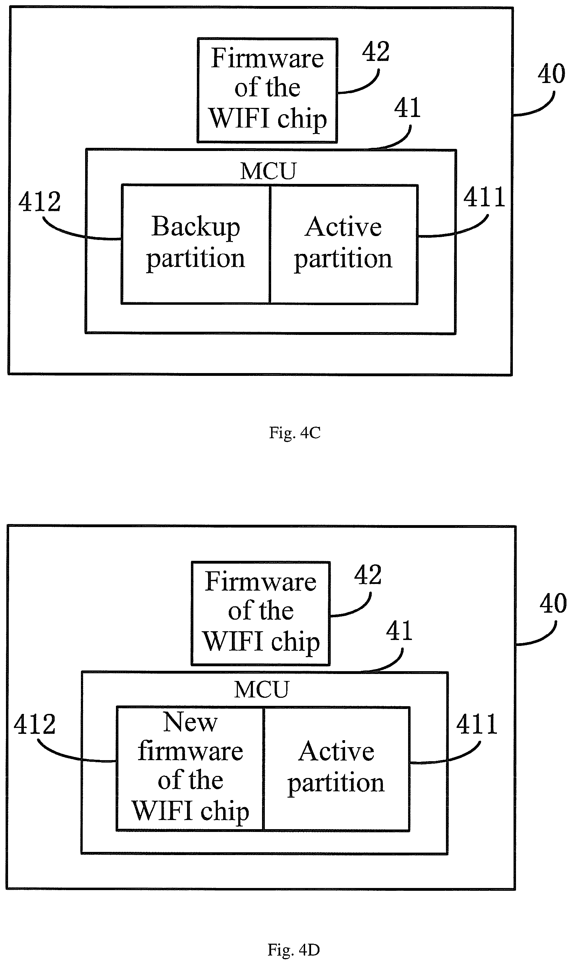

In an embodiment, both the MCU chip 41 and the WIFI chip 42 need to be upgraded. As showed in Fig. 4B, the intelligent device may remotely download new firmware of the MCU chip 41 to the first partition 411. As showed in Fig. 4C, the new firmware of the MCU chip 41 may be verified, then, after it is ensured that the new firmware of the MCU chip 41 is correct, the first partition 411 that the new firmware of the MCU chip 41 locates at is activated to be an active partition, and the original second partition 412 that the original proper firmware of the MCU chip 41 locates at is set to be a new first partition (i.e., a backup partition).

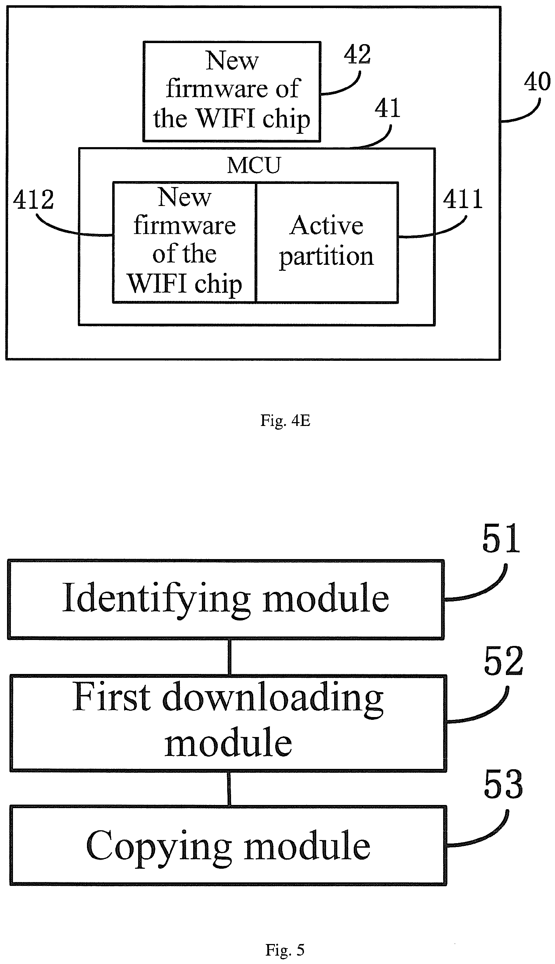

As shown in Fig. 4D, the intelligent device may remotely download new firmware of the WIFI chip 42 to the new first partition of the MCU chip. As shown in Fig. 4E, after the new firmware of the WIFI chip 42 is verified, the new firmware of the WIFI chip 42 is copied to the WIFI chip and overwrites the original proper firmware of the WIFI chip 42, then after the intelligent device is restarted, the upgrading the firmware of the intelligent device is completed.

Through the describing of the foregoing process, the process of upgrading the firmware according to the embodiments of the present disclosure may be clearly understood. It shall be understood that the foregoing process is exemplary and explanatory only and may not limit the present disclosure.

Fig. 5 is a block diagram illustrating a device for upgrading a firmware according to an exemplary embodiment. As shown in Fig. 5, the device for upgrading firmware comprises:
an identifying module 51, configured to, when it is determined that firmware of a first chip needs to be upgraded, identify a first partition of a flash memory in a second chip, for downloading firmware of the second chip;
a first downloading module 52, configured to download new firmware of the first chip to the first partition identified by the identifying module 51; and
a copying module 53, configured to copy the new firmware of the first chip downloaded by the first downloading module 52 from the first partition to an effective position in the first chip.

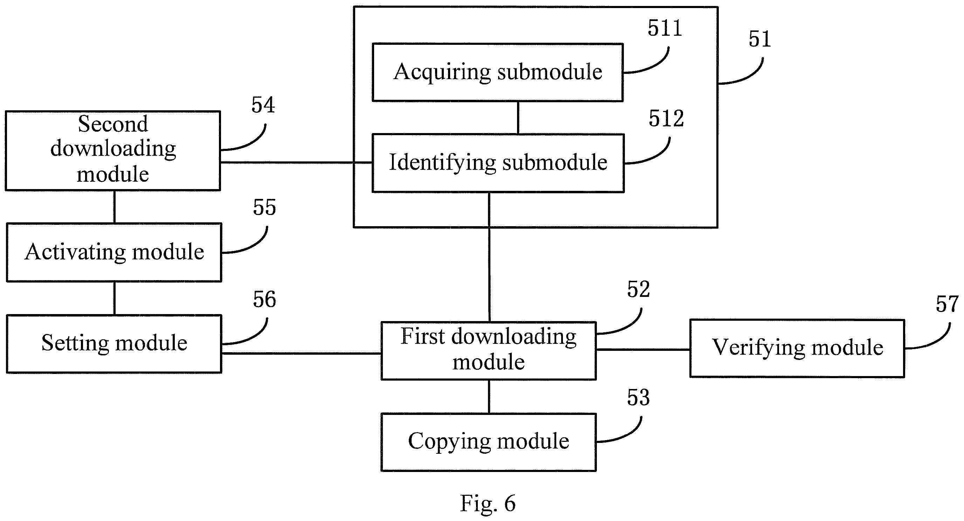

As shown in Fig. 6, the device may further comprises:
a second downloading module 54, configured to, when it is determined that the firmware of the second chip needs to be upgraded, download new firmware of the second chip to the first partition identified by the identifying module 51;
an activating module 55, configured to, after the new firmware of the second chip is downloaded to the first partition by the second downloading module 54, activate the first partition to be a new second partition for storing proper firmware of the second chip; and
a setting module 56, configured to, after the first partition is activated to be the second partition by the activating module 55, set an original second partition to be a new first partition for downloading firmware of the second chip, such that, when firmware of the first chip needs to be upgraded, the first partition of the flash memory in the second chip, for downloading firmware of the second chip, may be identified by the identifying module 51.

In an embodiment, the identifying module 51 comprises:
an acquiring submodule 511, configured to acquire partition information of the second chip; and
an identifying submodule 512, configured to identify the first partition of the flash memory in the second chip, for downloading firmware of the second chip, according to the partition information acquired by the acquiring submodule 511.

In an embodiment, the device may further comprise:
a verifying module 57, configured to, after the new firmware of the first chip is downloaded to the first partition by the first downloading module 52, verify the new firmware of the first chip.

With respect to the devices in the above embodiments, the specific manners for performing operations for individual modules therein have been described in detail in the embodiments regarding the methods, which will not be elaborated herein.

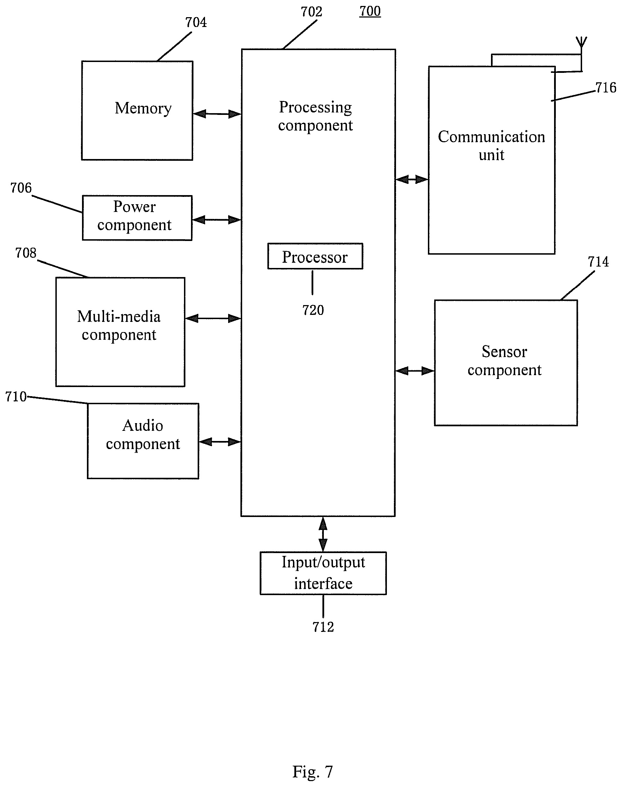

Fig. 7 is a block diagram illustrating a device adaptable for upgrading a firmware according to an exemplary embodiment. For example, the device 700 may be a mobile phone, a computer, a digital broadcast terminal, a messaging device, a gaming console, a tablet device, a medical device, exercise equipment, a personal digital assistant and the like.

Referring to Fig. 7, the device 700 may comprise one or more of the following components: a processing component 702, a memory 704, a power component 706, a multimedia component 708, an audio component 710, an input/output (I/O) interface 712, a sensor component 714, and a communication component 716.

The processing component 702 usually controls the overall operations of the device 700, such as the operations associated with display, telephone calls, data communications, camera operations, and recording operations. The processing component 702 may comprise one or more processors 720 to execute instructions to perform all or a part of the steps in the above described methods. Moreover, the processing component 702 may comprise one or more modules which facilitate the interaction between the processing component 702 and other components. For instance, the processing component 702 may comprise a multimedia module to facilitate the interaction between the multimedia component 708 and the processing component 702.

The memory 704 is configured to store various types of data to support the operations of the device 700. Examples of such data comprise instructions for any application or method operated on the device 700, contact data, phonebook data, messages, pictures, videos, etc. The memory 704 may be implemented by using any type of volatile or non-volatile memory devices or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 706 provides power to the respective components of the device 700. The power component 706 may comprise a power management system, one or more power sources, and other components associated with the generation, management, and distribution of power for the device 700.

The multimedia component 708 comprises a screen providing an output interface between the device 700 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a duration of time and a pressure associated with the touch or swipe action. In some embodiments, the multimedia component 708 comprises a front camera and/or a rear camera. The front camera and/or the rear camera may receive external multimedia data while the device 700 is in an operation mode such as a photographing mode or a video mode. Each of the front camera and the rear camera may be a fixed optical lens system or have focus and optical zoom capability.

The audio component 710 is configured to output and/or input audio signals. For example, the audio component 710 comprises a microphone (MIC) configured to receive external audio signals when the device 700 is in an operation mode such as a call mode, a recording mode and a voice recognition mode. The received audio signal may be further stored in the memory 704 or transmitted via the communication component 716. In some embodiments, the audio component 710 further comprises a speaker to output audio signals.

The I/O interface 712 provides an interface between the processing component 702 and peripheral interface modules, such as a keyboard, a click wheel, a button, and the like. The button may comprise, but not limited to, a home page button, a volume button, a starting button, and a locking button.

The sensor component 714 comprises one or more sensors to provide status assessments of various aspects of the device 700. For instance, the sensor component 714 may detect an open/closed status of the device 700, relative position of components, e.g., the display and the keyboard, of the device 700, a change in position of the device 700 or a component of the device 700, a presence or absence of an user contact with the device 700, an orientation or an acceleration/deceleration of the device 700, and a change in temperature of the device 700. The sensor component 714 may comprise a proximity sensor configured to detect the presence of nearby objects without any physical contact. The sensor component 714 may further comprise a light sensor, such as a CMOS or CCD image sensor, for use in imaging applications. In some embodiments, the sensor component 714 may further comprise an accelerometer sensor, a gyroscope sensor, a magnetic sensor, a pressure sensor, or a temperature sensor.

The communication component 716 is configured to facilitate communication, in a wire or wireless manner, between the device 700 and other devices. The device 700 may access a wireless network according to a communication standard, such as WiFi, 2G or 3G, or a combination thereof. In an exemplary embodiment, the communication component 716 receives a broadcast signal or broadcast associated information from an external broadcast management system via a broadcast channel. In an exemplary embodiment, the communication component 716 further comprises a near field communication (NFC) module to facilitate short-range communications. For example, the NFC module may be implemented according to a radio frequency identification (RFID) technology, an infrared data association (IrDA) technology, an ultra-bandwidth (UWB) technology, a Bluetooth (BT) technology, and other technologies.

In exemplary embodiments, the device 700 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium comprising instructions, such as comprised in the memory 704, executable by the processor 720 in the device 700, for performing the above described methods. For example, the non-transitory computer-readable storage medium may be a ROM, a random access memory (RAM), a CD-ROM, a magnetic tape, a floppy disc, an optical data storage device and the like.

After considering this description and performing the embodiments disclosed herein, those skilled in the art may easily anticipate other implementation aspects of the present disclosure. The present disclosure is meant to cover any variations, usage or adaptive change of the present disclosure, and these variations, usage or adaptive change follow general concept of the present disclosure and comprise the common knowledge or the customary technical refers to in the technical field that is not disclosed in the present disclosure. The description and embodiments are only exemplary, and the real range of the present disclosure are defined by the following claims.

It should be understood that the present disclosure is not limited to precise structures that are described above and shown in the accompanying drawings, and may be modified and changed without departing from the range of the present disclosure. The scope of the present disclosure is only defined by the appended claims.

## Claims

1. A method for upgrading firmware, for use in a device (40) comprising a first chip and a second chip, wherein the method comprises:
when it is determined that firmware of the first chip (42) needs to be upgraded, identifying (S101) a first partition (412) of a flash memory in a second chip (41), said first partition being configured to be used for downloading firmware of the second chip, wherein said first chip is a WIFI, Wireless Fidelity, chip or a Bluetooth chip and wherein the second chip is a Micro Control Unit chip;
downloading (S102) new firmware of the first chip (42) to the first partition (412) of the second chip; and
copying (S103) the new firmware of the first chip (42) from the first partition (412) of the second chip to an effective position in the first chip and to overwrite the firmware to be upgraded of the first chip;
wherein said identifying a first partition of a flash memory in a second chip comprises:
acquiring (S201) partition information of the second chip, said partition information indicating the position of where said first partition is located in the flash memory of the second chip; and
identifying (S202) the first partition of the flash memory in the second chip, configured to be used as a backup partition for downloading firmware, according to the partition information.

2. The method according to claim 1, **characterized in that**, the method further comprises:
when it is determined that an original firmware of the second chip (41) needs to be upgraded, downloading (S204) new firmware of the second chip to the first partition (412), said original firmware of the second chip being located in a second partition of the flash memory ;
setting (S205) the first partition (412) as an active partition for storing proper firmware of the second chip; and
setting (S206) the second partition (411) of the flash memory as a new backup partition for future downloads of firmware for either the first chip or the second chip.

3. The method according to claim 1 or 2, **characterized in that**, the method further comprises:
after the new firmware of the first chip is downloaded to the first partition, verifying (S203, S304) the new firmware of the first chip.

4. A device for upgrading firmware, for use in a device comprising a first chip and a second chip, wherein the device comprises:
an identifying module (51), configured to, when it is determined that firmware of the first chip needs to be upgraded, identify a first partition of a flash memory in the second chip, for downloading firmware of the second chip, wherein said first chip is a WIFI, Wireless Fidelity, chip or a Bluetooth chip and wherein the second chip is a Micro Control Unit chip;
a first downloading module (52), configured to download new firmware of the first chip to the first partition of the second chip identified by the identifying module (51); and
a copying module (53), configured to copy the new firmware of the first chip downloaded by the first downloading module (52) from the first partition of the second chip to an effective position in the first chip and overwrite the firmware to be upgraded of the first chip;
wherein the identifying module (51) further comprises:
an acquiring submodule (511), configured to acquire partition information of the second chip, said partition information indicating the position of where said first partition is located in the flash memory of the second chip; and
an identifying submodule (512), configured to identify the first partition of the flash memory in the second chip, for downloading firmware of the second chip, according to the partition information acquired by the acquiring submodule (511).

5. The device according to claim 4, **characterized in that**, the device further comprises:
a second downloading module (54), configured to, when it is determined that the firmware of the second chip needs to be upgraded, download new firmware of the second chip to the first partition identified by the identifying module (51);
an activating module (55), configured to, after the new firmware of the second chip is downloaded to the first partition by the second downloading module (54), activate the first partition to be a new second partition for storing proper firmware of the second chip; and
a setting module (56), configured to, after the first partition is activated to be the second partition by the activating module (55), set an original second partition to be a new first partition for downloading firmware of the second chip.

6. The device according to claim 4 or 5, **characterized in that**, the device further comprises:
a verifying module (57), configured to, after the new firmware of the first chip is downloaded to the first partition by the first downloading module (52), verify the new firmware of the first chip.

7. A computer program including instructions for executing the steps of a method for upgrading firmware according to any one of claims 1 to 3 when said program is executed by a computer.

8. A recording medium readable by a computer and having recorded thereon a computer program including instructions for executing the steps of a method for upgrading firmware according to any one of claims 1 to 3.

## Patentansprüche

1. Verfahren zur Aktualisierung von Firmware zur Verwendung in einer Vorrichtung (40), die einen ersten Chip und einen zweiten Chip umfasst, wobei das Verfahren umfasst:
wenn bestimmt wird, dass Firmware des ersten Chips (42) aktualisiert werden muss, Identifizieren (S101) einer ersten Partition (412) eines Flash-Speichers in einem zweiten Chip (41), wobei die erste Partition so konfiguriert ist, dass sie zum Herunterladen von Firmware des zweiten Chips verwendet wird, wobei der erste Chip ein Wireless-Fidelity-Chip, WiFi-Chip, oder ein Bluetooth-Chip ist und wobei der zweite Chip ein Mikrosteuereinheits-Chip ist;
Herunterladen (S102) neuer Firmware des ersten Chips (42) auf die erste Partition (412) des zweiten Chips; und
Kopieren (S103) der neuen Firmware des ersten Chips (42) aus der ersten Partition (S412) des zweiten Chips in eine effektive Position im ersten Chip und Überschreiben der zu aktualisierenden Firmware des ersten Chips;
wobei das Identifizieren einer ersten Partition eines Flash-Speichers in einem zweiten Chip umfasst:
Erfassen (S201) von Partitionsinformationen des zweiten Chips, wobei die Partitionsinformationen die Position angeben, in der sich die erste Partition im Flash-Speicher des zweiten Chips befindet; und
Identifizieren (S202) der ersten Partition des Flash-Speichers im zweiten Chip, die so konfiguriert ist, dass sie als eine Sicherungspartition zum Herunterladen von Firmware verwendet wird, gemäß den Partitionsinformationen.

2. Verfahren nach Anspruch 1, **dadurch gekennzeichnet, dass** das Verfahren ferner umfasst:
wenn bestimmt wird, dass eine Original-Firmware des zweiten Chips (41) aktualisiert werden muss, Herunterladen (S204) neuer Firmware des zweiten Chips auf die erste Partition (412), wobei die Original-Firmware des zweiten Chips sich in einer zweiten Partition des Flash-Speichers befindet;
Festlegen (S205) der ersten Partition (412) als aktive Partition zum Speichern der korrekten Firmware des zweiten Chips; und
Festlegen (S206) der zweiten Partition (411) des Flash-Speichers als neue Sicherungspartition für zukünftige Downloads von Firmware entweder für den ersten Chip oder den zweiten Chip.

3. Verfahren nach Anspruch 1 oder 2, **dadurch gekennzeichnet, dass** das Verfahren ferner umfasst:
Verifizieren (S203, S304) der neuen Firmware des ersten Chips nach dem Herunterladen der neuen Firmware des ersten Chips auf die erste Partition.

4. Vorrichtung zum Aktualisieren von Firmware zur Verwendung in einer Vorrichtung, die einen ersten Chip und einen zweiten Chip umfasst, wobei die Vorrichtung umfasst:
ein Identifizierungsmodul (51), das so konfiguriert ist, dass es, wenn bestimmt wird, dass Firmware des ersten Chips (42) aktualisiert werden muss, eine erste Partition eines Flash-Speichers in einem zweiten Chip identifiziert, um Firmware des zweiten Chips herunterzuladen, wobei der erste Chip ein Wireless-Fidelity-Chip, WiFi-Chip, oder ein Bluetooth-Chip ist und wobei der zweite Chip ein Mikrosteuereinheits-Chip ist;
ein erstes Download-Modul (52), das zum Herunterladen neuer Firmware des ersten Chips auf die vom Identifizierungsmodul (51) identifizierte erste Partition des zweiten Chips konfiguriert ist; und
ein Kopiermodul (53), das zum Kopieren der vom ersten Download-Modul (52) heruntergeladenen neuen Firmware des ersten Chips aus der ersten Partition des zweiten Chips in eine effektive Position im ersten Chip und Überschreiben der zu aktualisierenden Firmware des ersten Chips konfiguriert ist;
wobei das Identifizierungsmodul (51) ferner umfasst:
ein Erfassungs-Submodul (511), das zum Erfassen von Partitionsinformationen des zweiten Chips konfiguriert ist, wobei die Partitionsinformationen die Position angeben, in der sich die erste Partition im Flash-Speicher des zweiten Chips befindet; und
ein Identifizierungs-Submodul (512), das so konfiguriert ist, dass es die erste Partition des Flash-Speichers im zweiten Chip gemäß den vom Erfassungs-Submodul (511) erfassten Partitionsinformationen identifiziert, um Firmware des zweiten Chips herunterzuladen.

5. Vorrichtung nach Anspruch 4, **dadurch gekennzeichnet, dass** die Vorrichtung ferner umfasst:
ein zweites Download-Modul (54), das so konfiguriert ist, dass es, wenn bestimmt wird, dass die Firmware des zweiten Chips aktualisiert werden muss, neue Firmware des zweiten Chips auf die vom Identifizierungsmodul (51) identifizierte erste Partition herunterlädt;
ein Aktivierungsmodul (55), das so konfiguriert ist, dass es nach dem Herunterladen der neuen Firmware des zweiten Chips durch das zweite Download-Modul (54) die erste Partition als neue zweite Partition zum Speichern der korrekten Firmware des zweiten Chips aktiviert; und
ein Festlegungsmodul (56), das so konfiguriert ist, dass es nach dem Aktivieren der ersten Partition durch das Aktivierungsmodul (55) als zweite Partition eine zweite Originalpartition als neue erste Partition zum Herunterladen von Firmware des zweiten Chips festlegt.

6. Vorrichtung nach Anspruch 4 oder 5, **dadurch gekennzeichnet, dass** die Vorrichtung ferner umfasst:
ein Verifizierungsmodul (57), das so konfiguriert ist, dass es nach dem Herunterladen der neuen Firmware des ersten Chips durch das erste Download-Modul (52) auf die erste Partition die neue Firmware des ersten Chips verifiziert.

7. Computerprogramm, umfassend Anweisungen zum Ausführen der Schritte eines Verfahrens zur Aktualisierung von Firmware nach einem der Ansprüche 1 bis 3, wenn das Programm von einem Computer ausgeführt wird.

8. Aufzeichnungsmedium, das von einem Computer gelesen werden kann und ein Computerprogramm darauf aufgezeichnet aufweist, das Anweisungen zum Ausführen der Schritte eines Verfahrens zur Aktualisierung von Firmware nach einem der Ansprüche 1 bis 3 umfasst.

## Revendications

1. Procédé de mise à niveau d'un micrologiciel, destiné à être utilisé dans un dispositif (40) comprenant une première puce et une deuxième puce, le procédé comprenant :
lorsqu'il est déterminé que le micrologiciel de la première puce (42) doit être mis à niveau, l'identification (S101) d'une première partition (412) d'une mémoire flash dans une deuxième puce (41), ladite première partition étant configurée pour être utilisée pour télécharger un micrologiciel de la deuxième puce, dans lequel ladite première puce est une puce WIFI, Wireless Fidelity, ou une puce Bluetooth et dans lequel la deuxième puce est une puce de microcontrôleur ;
le téléchargement (S102) du nouveau micrologiciel de la première puce (42) vers la première partition (412) de la deuxième puce ; et
la copie (S103) du nouveau micrologiciel de la première puce (42) depuis la première partition (412) de la deuxième puce vers une position effective dans la première puce et l'écrasement du micrologiciel à mettre à niveau de la première puce ;
dans lequel ladite identification d'une première partition d'une mémoire flash dans une deuxième puce comprend :
l'acquisition (S201) d'informations de partition de la deuxième puce, lesdites informations de partition indiquant la position où ladite première partition est située dans la mémoire flash de la deuxième puce ; et
l'identification (S202) de la première partition de la mémoire flash dans la deuxième puce, configurée pour être utilisée comme partition de sauvegarde pour télécharger un micrologiciel, conformément aux informations de partition.

2. Procédé selon la revendication 1, **caractérisé en ce que** le procédé comprend en outre :
lorsqu'il est déterminé qu'un micrologiciel d'origine de la deuxième puce (41) doit être mis à niveau, le téléchargement (S204) du nouveau micrologiciel de la deuxième puce vers la première partition (412), ledit micrologiciel d'origine de la deuxième puce étant situé dans une deuxième partition de la mémoire flash ;
la définition (S205) de la première partition (412) en tant que partition active pour stocker le micrologiciel approprié de la deuxième puce ; et
la définition (S206) de la deuxième partition (411) de la mémoire flash comme nouvelle partition de sauvegarde pour les futurs téléchargements de micrologiciel pour la première puce ou la deuxième puce.

3. Procédé selon la revendication 1 ou 2, **caractérisé en ce que** le procédé comprend en outre :
une fois que le nouveau micrologiciel de la première puce est téléchargé sur la première partition, la vérification (S203, S304) du nouveau micrologiciel de la première puce.

4. Dispositif de mise à niveau de micrologiciel, destiné à être utilisé dans un dispositif comprenant une première puce et une deuxième puce, le dispositif comprenant :
un module d'identification (51), configuré pour, lorsqu'il est déterminé que le micrologiciel de la première puce doit être mis à niveau, identifier une première partition d'une mémoire flash dans la deuxième puce, pour télécharger le micrologiciel de la deuxième puce, dans lequel ladite première puce est une puce WIFI, Wireless Fidelity, ou une puce Bluetooth et dans lequel la deuxième puce est une puce de microcontrôleur ;
un premier module de téléchargement (52), configuré pour télécharger un nouveau micrologiciel de la première puce vers la première partition de la deuxième puce identifiée par le module d'identification (51) ; et
un module de copie (53), configuré pour copier le nouveau micrologiciel de la première puce téléchargé par le premier module de téléchargement (52) depuis la première partition de la deuxième puce vers une position effective dans la première puce et écraser le micrologiciel à mettre à niveau de la première puce ;
dans lequel le module d'identification (51) comprend en outre :
un sous-module d'acquisition (511), configuré pour acquérir des informations de partition de la deuxième puce, lesdites informations de partition indiquant la position où ladite première partition est située dans la mémoire flash de la deuxième puce ; et
un sous-module d'identification (512), configuré pour identifier la première partition de la mémoire flash dans la deuxième puce, pour télécharger le micrologiciel de la deuxième puce, conformément aux informations de partition acquises par le sous-module d'acquisition (511).

5. Dispositif selon la revendication 4, **caractérisé en ce que** le dispositif comprend en outre :
un deuxième module de téléchargement (54), configuré pour, lorsqu'il est déterminé que le micrologiciel de la deuxième puce doit être mis à niveau, télécharger le nouveau micrologiciel de la deuxième puce vers la première partition identifiée par le module d'identification (51) ;
un module d'activation (55), configuré pour, une fois que le nouveau micrologiciel de la deuxième puce a été téléchargé sur la première partition par le deuxième module de téléchargement (54), activer la première partition pour être une nouvelle deuxième partition pour stocker le micrologiciel approprié de la deuxième puce ; et
un module de définition (56), configuré pour, une fois que la première partition est activée pour être la deuxième partition par le module d'activation (55), définir une deuxième partition d'origine pour être une nouvelle première partition pour télécharger le micrologiciel de la deuxième puce.

6. Dispositif selon la revendication 4 ou 5, **caractérisé en ce que** le dispositif comprend en outre :
un module de vérification (57), configuré pour, une fois que le nouveau micrologiciel de la première puce a été téléchargé sur la première partition par le premier module de téléchargement (52), vérifier le nouveau micrologiciel de la première puce.

7. Programme informatique comprenant des instructions pour exécuter les étapes d'un procédé de mise à niveau de micrologiciel selon l'une quelconque des revendications 1 à 3 lorsque ledit programme est exécuté par un ordinateur.

8. Support d'enregistrement lisible par un ordinateur et sur lequel est enregistré un programme informatique comprenant des instructions pour exécuter les étapes d'un procédé de mise à niveau de micrologiciel selon l'une quelconque des revendications 1 à 3.
